(19) Europäisches Patentamt
European Patent Office
Office européen des brevets

(11) Numéro de publication: 0 328 837
A1

(12) **DEMANDE DE BREVET EUROPEEN**

(21) Numéro de dépôt: **88403259.0**

(22) Date de dépôt: **21.12.88**

(51) Int. Cl.4: **C09J 3/16 , C08F 283/00**

Le titre de l'invention a été modifié (Directives relatives à l'examen pratiqué à l'OEB, A-III, 7.3)

(30) Priorité: **22.12.87 FR 8717907**

(43) Date de publication de la demande: **23.08.89 Bulletin 89/34**

(84) Etats contractants désignés: **AT BE CH DE ES FR GB GR IT LI LU NL SE**

(71) Demandeur: **SOCIETE NATIONALE ELF AQUITAINE**
**Tour Elf 2 Place de la Coupole La Défense 6**
**F-92400 Courbevoie(FR)**

(72) Inventeur: **Truong, Dinh Nguyen**
**10, avenue du Général Leclerc**
**F-64000 Pau(FR)**

(74) Mandataire: **Radmilovitch, Serge**
**Société Nationale Elf Aquitaine Division Propriété Industrielle Tour Elf**
**F-92078 Paris La Défense - Cedex 45(FR)**

(54) **Formulation adhésive acrylique anaérobie stable chimiquement.**

(57) La formulation adhésive anaérobie est du type comportant une phase acrylique monomère constituée, en poids, de 50 à 100% d'un ou plusieurs esters pluriacryliques et de 50 à 0% d'au moins un monomère insaturé choisi parmi les monomères acryliques et les monomères insaturés non acryliques et un système générateur de radicaux libres inhibé en présence d'oxygène.

Cette formulation renferme également un adjuvant d'amélioration de la résistance au choc et au cisaillement consistant en un polyuréthanne préformé ou formé in situ et/ou un adjuvant de stabilisation thermique consistant en au moins une résine époxyde associée à un durcisseur latent de ladite résine.

Application à la réalisation de collages anaérobies.

EP 0 328 837 A1

# Formulation adhésive acrylique anaérobie stable chimiquement et susceptible de fournir un joint adhésif durci présentant des résistances améliorées au choc et au cisaillement ou/et une bonne tenue thermique

L'invention a trait à une formulation adhésive acrylique anaérobie monocomposante, qui est stable chimiquement et qui est susceptible de fournir un joint adhésif durci présentant des résistances améliorées au choc et au cisaillement ou/et une bonne tenue thermique.

Les formulations adhésives acryliques anaérobies sont des mélanges à base d'ester acryliques polymérisables par voie radicalaire et consistant en majorité en esters pluriacryliques et de générateurs chimiques de radicaux libres choisis parmi les composés peroxydés, lesdits mélanges ayant un durcissement inhibé par l'oxygène.

Ces formulations anaérobies se maintiennent à l'état non durci aussi longtemps qu'elles sont en contact avec l'oxygène atmosphérique. Par contre, lorsqu'elles sont placées entre des surfaces métalliques ou autres surfaces imperméables à l'oxygène atmosphérique, l'absence de contact avec l'oxygène conduit rapidement à leur durcissement.

De telles formulations adhésives anaérobies sont utilisées, dans divers domaines de l'industrie, pour la réalisation de joints d'étanchéité ou d'assemblages et notamment pour effectuer le blocage d'écrous.

Malgré leur utilisation croissante, les formulations adhésives acryliques anaérobies présentent encore certains inconvénients. Tout d'abord, leur stabilité chimique reste encore insuffisante en raison du fait qu'il est nécessaire, dans la plupart des cas, d'incorporer à ces formulations des accélérateurs latents de polymérisation radicalaire afin d'augmenter la vitesse de polymérisation des monomères acryliques une fois que ladite polymérisation a été initiée par le générateur de radicaux libres. La présence de ces ingrédients dans la formulation anaérobie peut entraîner un durcissement indésirable de ladite formulation avant son utilisation et par exemple au cours de son stockage. L'incorporation d'inhibiteurs de polymérisation, par exemple de composés du type des hydroquinones, à la formulation réduit ce risque de durcissement prématuré mais ne permet pas de le supprimer complètement.

En outre, comme les monomères acryliques présents dans les formulations anaérobies sont en majorité des esters pluriacryliques dont la polymérisation conduit à un réseau polymère très compact, les joints adhésifs obtenus après durcissement desdites formulations présentent une rigidité mécanique trop importante et par la même une résistance insuffisante au choc et aux efforts de pelage. De plus, les formulations adhésives anaérobies présentent une stabilité thermique qui dans la majorité des cas n'est pas satisfaisante. Enfin, lesdites formulations possèdent une grande fluidité et il est exclus de pouvoir les utiliser pour les applications, notamment collage de grandes surfaces métalliques planes, nécessitant de faire appel à des formulations adhésives fortement épaissies.

L'objet de l'invention est de fournir une formulation adhésive acrylique anaérobie monocomposante, qui permet de remédier aux inconvénients des formulations antérieures correspondantes.

La formulation suivant l'invention est du type comportant une phase acrylique monomère constituée, en poids, de 50 à 100% d'un ou plusieurs esters pluriacryliques et de 50 à 0% d'au moins un monomère insaturé choisi parmi les monomères monoacryliques et les monomères insaturés non acryliques polymérisables par voie radicalaire et un système générateur de radicaux libres, qui est soluble dans la phase acrylique monomère et dont l'action génératrice de radicaux libres est inhibée en présence d'oxygène, et elle se caractérise en ce qu'elle renferme en outre, en solution dans la phase acrylique monomère, un adjuvant d'amélioration de la résistance au choc et au cisaillement de la formulation durcie choisi parmi les polyuréthannes linéaires non réactifs et les réseaux polyuréthannes réticulés ou non formés in situ au sein de la phase acrylique monomère à partir d'un système précurseur de polyuréthanne mis en solution dans ladite phase acrylique et comportant un ou plusieurs isocyanates polyfonctionnels et un ou plusieurs polyols, ou/et un adjuvant de stabilisation thermique consistant en au moins une résine époxyde associée à un durcisseur latent de ladite résine.

La présence dans la formulation adhésive du polyuréthanne réticulé ou non ou de la résine époxyde associée au durcisseur latent ou encore de ces deux composantes conduit, au cours du durcissement de l'adhésif, à la formation d'un réseau acrylique formé par les chaînes polymères résultant de la polymérisation du ou des monomères de la phase acrylique au sein duquel sont présentes les chaînes polyuréthannes réticulées ou non ou un réseau polyépoxyde réticulé ou les deux.

La formulation adhésive suivant l'invention présente une stabilité chimique accrue, avec comme conséquence la possibilité d'utiliser des systèmes générateurs de radicaux libres plus actifs ou encore de supprimer les inhibiteurs de polymérisation qui dans de nombreux cas constituent une gêne pour les applications envisagées. La présence de l'adjuvant polyuréthanne conduit à une meilleure souplesse du

joint adhésif durci, ce qui se traduit par des résistances améliorées dudit joint en traction cisaillement, au pelage ou au choc, tandis que l'incorporation de la résine époxyde associée au durcisseur latent conduit à une amélioration substantielle de la stabilité du joint adhésif à haute température. Enfin, la création du réseau polyuréthanne réticulé dans la formulation adhésive permet d'ajuster la viscosité de cette dernière suivant les besoins.

Lorsque la formulation adhésive acrylique renferme seulement l'adjuvant de type polyuréthanne, les pourcentages pondéraux respectifs x de la phase acrylique monomère et y de l'adjuvant polyuréthanne dans l'ensemble de ces deux composantes sont avantageusement tels que $99{,}8 \leq x \leq 35$ et $0{,}2 \leq y \leq 65$ et de préférence tels que $95 \leq x \leq 50$ et $5 \leq y \leq 50$.

Lorsque la formulation adhésive acrylique renferme seulement l'adjuvant de type résine époxyde associée à son durcisseur, les pourcentages pondéraux respectifs x de la phase acrylique monomère et z de l'adjuvant époxyde dans l'ensemble de ces deux composantes sont avantageusement tels que $99{,}8 \leq x \leq 50$ et $0{,}2 \leq z \leq 50$ et de préférence tels que $95 \leq x \leq 70$ et $5 \leq z \leq 30$.

Pour les formulations adhésives suivant l'invention incluant à la fois l'adjuvant de type polyuréthane et l'adjuvant de type époxyde, les pourcentages pondéraux respectifs x de la phase acrylique monomère, y de l'adjuvant polyuréthanne et z de l'adjuvant de type résine époxyde dans l'ensemble de ces trois composantes de la formulation sont avantageusement tels que $15 \leq x \leq 99{,}8$ , $0{,}1 \leq y \leq 60$ et $0{,}1 \leq z \leq 90$ avec $x + y + z = 100\%$ et de préférence tels que $30 \leq x \leq 89$, $1 \leq y \leq 30$ et $10 \leq z \leq 70$ avec $x + y + z = 100\%$.

Dans les formulations précitées, le pourcentage y représente soit le pourcentage de polyuréthanne linéaire préformé soit le pourcentage de système précurseur de polyuréthanne.

Le ou les polyols entrant dans la composition du système précurseur de polyuréthanne sont des composés organiques que renferment au moins deux groupements hydroxyles dans leurs molécules et ont une masse moléculaire moyenne en nombre comprise entre 60 et 200 000. Lesdits polyols peuvent être notamment des polyétherpolyols résultant de la réaction d'un ou plusieurs polyols de faible masse moléculaire, par exemple éthylène glycol, propylène glycol, butylène glycol, pentylène glycol, hexylène glycol, glycérol, triméthylolpropane, triméthyloléthane, pentaerythritol, dipentaerythritol, méthylglycoside, sorbitol et saccharose avec un ou plusieurs composés époxydes du type oxyde de propylène, oxyde, d'éthylène ou encore des polyesterpolyols résultant de la réaction d'un ou plusieurs polyols micromoléculaires du type précité avec un ou plusiers acides polycarboxyliques tels que les acides oxalique, malonique, succinique, glutarique, adipique, pimélique, subérique, azélaique, sébacique, malique, phtaliques, cyclohexanedicarboxyliques, endométhylènetétrahydrophtaliques ou les anhydrides de tels acides. Peuvent être également utilisés des polyols azotés ou soufrés et notamment des polyesteramides ou polyétheresteramides hydroxylés en bouts de chaînes ou encore des alcoylènediamines ou des polyalcoylènepolyamines dont les atomes d'hydrogène fixés aux atomes d'azote sont remplacés par des restes hydroxyalcoyles comme, par exemple, hydroxyéthyles ou hydroxypropyles.

Conviennent tout spécialement à titre de polyols, les polyétherdiols choisis parmi les polyoxyalcoylèneglycols tels que polyoxyéthylèneglycols, polyoxypropylèneglycols, polyoxytétraméthylèneglycols, polyoxypentaméthylèneglycols, polyoxyhexaméthylèneglycols, ayant une masse moléculaire en nombre ( $\bar{M}n$) comprise entre 100 et 200 000 et de préférence entre 200 et 50 000, ainsi que les polyesterdiols aliphatiques tels que les polyadipates d'alcoylèneglycols ou d'oxyalcoylèneglycols ou les polycaprolactones ou les polyesterdiols aromatiques tels que les polytéréphtalates d'alcoylèneglycols ou d'oxyalcoylèneglycols ayant une masse moléculaire moyenne en nombre comprise entre 100 et 200 000 et de préférence entre 200 et 50 000.

Aux diols précités on peut également ajouter des polyols ayant au moins trois groupements hydroxyles dans la molécule, par exemple triméthylolpropane, triméthyloléthane, pentaérythritol, lesdits polyols étant utilisés en quantité globale représentant au plus 60% et de préférence entre 0,5 et 15% du poids desdits diols, ces polyols jouant le rôle d'agents de réticulation.

Les isocyanates organiques polyfonctionnels, qui sont utilisés conjointement aux polyols, sont des composés organiques possédant au moins deux fonctions isocyanates dans leur molécule et ayant une masse moléculaire en nombre inférieure à 5 000. De tels isocyanates polyfonctionnels peuvent être des isocyanates aliphatiques non cycliques ou cycliques tels que diisocyanate-1, 6 hexane, isophorone diisocyanates, biuret triisocyanate, trimère de l'isophorone diisocyanate, diméryldiisocyanate, trimère du diisocyanatohexane, diisocyanato-4,4′ dicyclohexylméthane,bis(isocyanatométhyl)-1,3 cyclohexane, ester méthylique de l'acide diisocyanato-2,6 hexanoique ou encore des isocyanates aromatiques tels que diisocyanato-2,4 toluène, diisocyanato-2,6 toluène, diisocyanato-1,5 naphtalène, diisocyanato-4,4′ diphénylméthane, diisocyanato-2,4′diphénylméthane, diisocyanato-4,4′ diphénylméthane carbodiimidisé ou uréthanisé, triisocyanato-triphénylméthane, trimère du diisocyanato-2,4 toluène, uretdione, de diisocyanato-2,4 toluène ou des acides diisocyanato-2,4 toluène sulfonique, isocyanates polymères dérivés du diisocyanato-4,4′ diphénylméthane. Les isocyanates organiques polyfonctionnels utilisables suivant l'invention peuvent être également choisis parmi les isocyanates prépolymères résultant de la réaction contrôlée d'un diisocyanate organique sur un polyol, par exemple adduct d'un diisocyanate toluène avec le triméthylolpropane.

Lorsque l'adjuvant polyuréthanne consiste en un polyuréthanne linéaire non réactif formé avant son incorporation à la phase acrylique monomère ou en un polyuréthanne non réticulé formé in situ au sein de ladite phase à partir du système précurseur de polyuréthanne, ces polyuréthannes sont obtenus par réaction d'un ou plusieurs diols avec un ou plusieurs isocyanates difonctionnels, le ou lesdits diols ainsi que le ou lesdits isocyanates difonctionnels étant avantageusement choisis parmi les diols et les diisocyanates mentionnés précédemment.

Lorsque l'adjuvant polyuréthanne consiste en un polyuréthanne réticulé formé in situ au sein de la phase acrylique monomère à partir du système précurseur de polyuréthanne, ledit système précurseur est formé d'un ou plusieurs isocyanates polyfonctionnels et d'un ou plusieurs polyols choisis parmi les diols et les mélanges de diols et de polyols ayant au moins trois fonctions hydroxyles de telle sorte que ce système précurseur renferme une quantité appropriée d'au moins un isocyanate possédant au moins trois fonctions isocyanates ou/et d'au moins un polyol ayant au moins trois fonctions hydroxyles pour qu'il y ait réticulation du polyuréthanne sans qu'apparaisse de séparation de phases. Ainsi on peut former le système précurseur de polyuréthanne réticulé en associant un ou plusieurs isocyanates organiques consistant en partie ou en totalité en un ou plusieurs isocyanates renfermant au moins trois fonctions isocyanates à un ou plusieurs diols ou à un mélange d'un ou plusieurs diols et d'un ou plusieurs polyols renfermant au moins trois fonctions hydroxyles, la quantité du ou desdits polyols au moins trifonctionnels représentant au plus 60% et de préférence entre 0,5 et 15% du poids global du ou des diols du mélange.

On peut encore former le système précurseur de polyuréthanne réticule en associant un ou plusieurs diisocyanates à un mélange d'un ou plusieurs diols et d'un ou plusieurs polyols renfermant au moins trois fonctions hydroxyles, la quantité globale du ou desdits polyols au moins trifonctionnels représentant au plus 60% et de préférence entre 0,5 et 15% du poids global du ou des diols du mélange.

Les proportions respectives du ou des polyols et du ou des isocyanates polyfonctionnels à utiliser pour constituer le système précurseur de polyuréthanne correspondent sensiblement à celles assurant une stoechiométrie entre les groupements isocyanates et les groupements hydroxyles, avec de préférence emploi d'un léger excès du ou des polyisocyanates par rapport à la stoechiométrie pour prévenir d'éventuelles réactions secondaires parasites avec certains monomères acryliques.

La résine époxyde présente dans la formulation adhésive suivant l'invention peut consister en une résine époxyde unique ou en un mélange de résines époxydes, que l'on choisit parmi les diverses résines époxydes connues, qui renferment au moins deux groupements époxydes dans leur molécule. Des exemples de résines époxydes utilisables suivant l'invention sont tels que diglycidyl éther du bis(hydroxy-4 phényl)-2,2 propane encore appelé bisphénol A, diglycidyléther du tétrabromobisphénol A, diglycidyl éther du bis(hydroxy-4 phényl)méthane encore appelé bisphénol F, triglycidyléther du trihydroxyphénylméthane, triglycidyléther du paraaminophénol,tétraglycidyléther de la méthylène dianiline, tetraglycidyléther du tétraphényloléthane, polyglycidyléthers de résines phénol/formol, polyglycidyléthers de résines crésol/formol, résines polyépoxydées du type époxyhydantoines, époxycyanurates, polyoxypropylènes époxydés, phtalates de glycidyle et résines époxydes cycloaliphatiques.

Comme indiqué précédemment, la formulation adhésive renferme un durcisseur latent pour la résine époxyde, c'est-à-dire suivant l'invention un composé qui est susceptible de réticuler la résine époxyde lorsque la température au sein de la formulation adhésive dépasse un certain seuil, en particulier a une valeur supérieure à 60 °C et de préférence supérieure à 80 °C, et qui est sensiblement inactif au sein de la composition lorsque la température de cette dernière est en-dessous dudit seuil. Une description des durcisseurs de résine époxyde parmi lesquels peut être choisi le durcisseur latent utilisé dans la formulation adhésive suivant l'invention est donnée, entre autres, dans les livres "HANDBOOK OF EPOXY RESINS" de MM. LEE et NEVILLE (MAC GRAW HILL ED. 1967), Chapitres 7 à 13 et 15-16, et "EPOXY RESINS : CHEMISTRY AND TECHNOLOGY" de MM. MAY et TANAKA (DEKKER ED. 1973), pages 239 à 325. Des durcisseurs préférés suivant l'invention sont constitués par les diamines aromatiques, notamment bis-(aminophényl)sulfones telles que la bis(amino-4 phényl)sulfone, et le dicyandiamide. On peut suivant l'invention faire préréagir le durcisseur de résine époxyde de type amine aromatique avec une partie de la résine époxyde pour former un adduct et utiliser l'adduct ainsi obtenu comme durcisseur modifié.

La quantité de durcisseur latent de type diamine aromatique présent dans la formulation représente avantageusement 1 à 30% et de préférence 5 à 15% du poids de la résine époxyde.

Pour améliorer l'activité du durcisseur précité, on peut ajouter à la formulation adhésive un ou plusieurs catalyseurs, qui consistent en particulier en acides de LEWIS, notamment $BF_3$ et $SnCl_2$, ou en les

complexes de tels acides de LEWIS avec des amines telles que monoéthylamine (en abrégé MEA), diméthylaniline, benzylamine, pipéridine, ou encore avec des éthers tels que les oxydes dialcoyliques comme l'oxyde d'éthyle ou l'oxyde de méthyle, ou bien encore avec des alcools tels que méthanol, éthylène glycol, butylène glycol, diéthylène glycol.

Ces composés de type acides de LEWIS peuvent être également utilisés seuls comme durcisseurs de la résine époxyde, en quantité allant de 0,5 à 10% et de préférence de 1 à 6% du poids de cette résine.

Les esters pluriacrylique, qui constituent la fraction majoritaire de la phase acrylique monomère, sont des esters acryliques polyfonctionnels renfermant dans leur molécule au moins deux groupements de formule 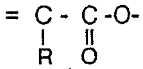

dans laquelle R désigne un atome d'hydrogène ou de chlore ou un radical alcoyle en $C_1$ à $C_3$, notamment méthyle.

Avantageusement lesdits esters pluriacryliques répondent à la formule

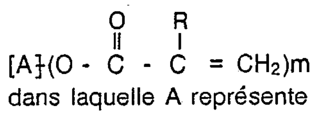

dans laquelle A représente un radical organique m-valent renfermant de 2 à 50 atomes de carbone, R a la signification précitée et m est un nombre entier au moins égal à 2 et de préférence allant de 2 à 5.

En particulier les monomères pluriacryliques peuvent être choisis parmi :

- les esters polyacryliques de polyols qui comprennent notamment des diacrylates et diméthacrylates d'alcoylène tels que diacrylates et diméthacrylates de tétraméthylène ou d'hexaméthylène, des diacrylates et diméthacrylates de polyoxyalcoylène tels que diacrylates ou diméthacrylates de diéthylèneglycol, de triéthylèneglycol, de tétraéthylèneglycol ou encore de dipropylèneglycol, des triacrylates et triméthacrylates tels que triacrylate ou triméthacrylate de triméthylolpropane, des tétracrylates et tétraméthacrylates tels que tétracrylate et tétraméthacrylate de diglycérol ou tétracrylate et tétraméthacrylate de pentaerythritol, des pentacrylates et pentaméthacrylates tels que ceux de pentaerythritolmonohydroxy;
- les esters prépolymères à groupements acryliques terminaux préparés en traitant par un acrylate ou méthacrylate d'hydroxyalcoyle ou d'aminoalcoyle le produit de réaction d'un excès d'un isocyanate avec une polyamine à groupements amines primaires ou secondaires ou un polyol; et
- les monomères du type uréthanne/acrylate ou uréide/acrylate résultant de la réaction d'un polyisocyanate avec un ester acrylique tel qu'un acrylate ou un méthacrylate dont le reste ester possède un groupement hydroxyle ou un groupement aminé primaire ou secondaire.

Des esters pluriacryliques préférés sont les esters diacryliques répondant à la formule

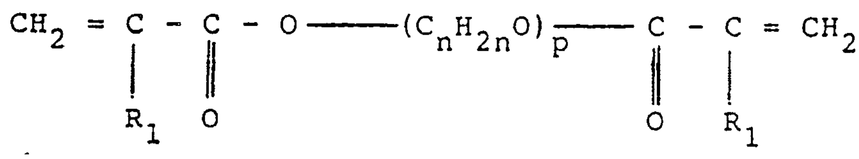

dans laquelle $R_1$ est un atome d'hydrogène ou un radical méthyle, n est un nombre entier allant de 2 à 4 et de préférence égal à 2 ou 3 et p est un nombre entier allant de 2 à 12 et de préférence prenant les valeurs de 2 à 8.

Des exemples de tels esters sont tels que diacrylates et diméthacrylates de triéthylène glycol, de tetraéthylène glycol, de pentaméthylène glycol, d'hexaméthylène glycol ou encore de dipropylène glycol.

Les monomères monoacryliques ainsi que les monomères insaturés non acryliques polymérisables par voie radicalaire, qui sont susceptibles d'être associés aux esters pluriacryliques, doivent être compatibles avec les esters pluriacryliques, c'est-à-dire miscibles auxdits esters, pour former une phase acrylique monomère homogène.

Les monomères monoacryliques sont en particulier choisis parmi les composés acryliques de formule

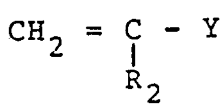

dans laquelle $R_2$ désigne un atome d'hydrogène ou un radical alcoyle en $C_1$ à $C_3$ et Y représente un groupement nitrile ou un reste 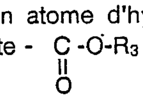

avec $R_3$ désignant un radical choisi parmi les radicaux monovalents renfermant jusqu'à 12 atomes de carbone et notamment parmi les radicaux alcoyles, aminoalcoyles, époxyalcoyles, hydroxyalcoyles et chloroalcoyles en $C_1$ à $C_{12}$, les radicaux cycloalcoyles ou hétérocycliques en $C_4$ à $C_{12}$ et les radicaux alcényles en $C_2$ à $C_{12}$. Des exemples de ces monomères sont tels que méthacrylate d'isobutyle, méthacrylate d'hexyle, méthacrylate de lauryle, acrylate d'éthyle, acrylate d'isobutyle, acrylate d'éthyl-2 hexyle, méthacrylate d'hydroxyéthyle, méthacrylate d'hydroxypropyle, méthacrylate de glycidyle, acrylate d'hyroxyéthyle, acrylate d'hydroxypropyle, acrylonitrile, méthacrylonitrile.

Parmi les monomères insaturés non acryliques on peut citer notamment les composés tels que styrène, alpha-méthylstyrène, indène, divinylbenzène, vinylpyrrolidone, acétate de vinyle.

Lorsque la phase acrylique monomère renferme un ou plusieurs monomères insaturés non acryliques polymérisables par voie radicalaire, la proportion globale desdits monomères insaturés dans ladite phase est de préférence au plus égale à 20% du poids global des divers monomères qu'elle contient.

Avantageusement le système générateur de radicaux libres consiste en au moins un composé peroxydé, qui est soluble dans la phase acrylique monomère et dont l'action génératrice de radicaux libres est inhibée par l'oxygène, ou en une association d'un tel composé peroxydé avec un ou plusieurs activateurs. Le ou les composés peroxydés du système générateur de radicaux libres peuvent consister notamment en peroxydes tels que les peroxydes de dialcoyle, par exemple peroxyde de ditertiobutyle, peroxyde de dicumyle, peroxyde de lauroyle, ou plus spécialement en hydroperoxydes ou en composés peroxydés susceptibles de se décomposer ou de s'hydrolyser pour donner des hydroperoxydes in situ. De préférence, le composé peroxydé du système générateur de radicaux libres est formé d'un ou plusieurs hydroperoxydes organiques répondant à la formule $R_4$ OOH, dans laquelle $R_4$ désigne un radical hydrocarboné en $C_2$ à $C_{18}$ et de préférence en $C_3$ à $C_{12}$, ledit radical étant éventuellement substitué par un ou plusieurs groupements fonctionnels sans action sur la fonction hydroperoxyde, le radical $R_4$ étant en particulier un radical alcoyle, aryle ou aralcoyle. Des exemples de tels hydroperoxydes organiques sont tels que hydroperoxyde de cumène, hydroperoxyde de tertiobutyle, hydroperoxyde de méthyléthylcétone, hydroperoxyde d'isopropyle, hydroperoxyde de cyclohexyle.

Dans certains cas il peut être avantageux d'utiliser les hydroperoxydes en association avec d'autres composés peroxydés et notamment avec des peroxydes tels que les peroxydes de dialcoyle.

La quantité du système générateur de radicaux libres dans la formulation adhésive anaérobie peut varier assez largement selon la nature dudit système et celle des monomères à polymériser. Lorsque le système générateur de radicaux libres consiste en un ou plusieurs composés peroxydés ou renferme un ou plusieurs desdits composés, la quantité totale de composés peroxydés dans ce système est inférieure à 10% et de préférence se situe entre 0,1 et 6% du poids des monomères à polymériser présents dans la formulation.

Les activateurs susceptibles d'être associés aux composés peroxydés pour constituer le système générateur de radicaux libres sont notamment des amines tertiaires dont les radicaux fixés à l'atome d'azote renferment jusqu'à dix atomes de carbone chacune et en particulier des trialcoylamines telles que triéthylamine ou tributylamine ou encore des N,N-dialcoylarylamines telles que la N,N-diméthylparatoluidine, ou bien des amines secondaires hétérocycliques, par exemple pyrrolidine, pipérazine et tétrahydro-1,2,3,4 quinoléine, ou encore des sulfimides organiques et par exemple saccharine utilisées seules ou en association avec des amines secondaires hétérocycliques ou des N,N-dialcoylarylamines, ou bien des composés tels que succinimide, phtalimide et formamide. La quantité d'activateur peut varier dans de larges limites. Avantageusement la quantité totale d'activateur est inférieure à 10% et de préférence comprise entre 0.05% et 6% du poids des monomères à polymériser présents dans la formulation anaérobie.

Bien que la formulation suivant l'invention présente une bonne stabilité chimique, on peut encore améliorer cette stabilité en incorporant à ladite formulation des inhibiteurs de polymérisation et en particulier des composés phénoliques tels que ditertiobutyl-2,6-méthyl-4 phénol ou encore des quinones ou hydroquinones, en quantité représentant, par exemple 10 à 10 000 ppm et de préférence 10 à 5000 ppm.

Pour prévenir l'influence néfaste des impuretés métalliques, contenues éventuellement dans les ingrédients composant la formulation ou apportées lors de la préparation de la formulation dans des dispositifs de mélange métalliques, sur la stabilité au stockage de la formulation anaérobie, on peut également lui ajouter des agents chélatants susceptibles de complexer lesdites impuretés métalliques. Conviennent en particulier comme agents chélatants des $\alpha$-aminocarboxylates ou des $\beta$-aminocarboxylates tels que les sels alcalins des acides alcoylènedi aminetétracétique et notamment le sel tétrasodique de l'acide éthylènediaminetétracétique, des composés hydroxyaryliques substitués en $\alpha$ tels que salicylaldéhyde, orthoaminophénol, sel disodique du pyrocatéchol et sel disodique de l'acide orthothiobenzoïque, ou

encore des composés tels que bipyridyle, tripyridyle, hydroxy-8 quinoléine, 1,10-phénanthroline et salicylaldoxime. L'agent chélatant est incorporé à la formulation anaérobie à raison de 10 à 3000 ppm et de préférence 50 à 1000 ppm.

Si besoin est, on peut encore incorporer à la formulation adhésive anaérobie d'autres ingrédients susceptibles de communiquer à ladite formulation des propriétés additionnelles désirables, de tels ingrédients pouvant inclure notamment des épaississants, des plastifiants, des colorants, des agents thixotropes. Lesdits ingrédients sont utilisés en quantités correspondant à celles généralement préconisées dans l'art.

La formulation anaérobie suivant l'invention renferme toujours une certaine quantité d'oxygène dissous et de préférence elle est saturée en oxygène.

La formulation anaérobie peut être préparée par toute méthode de mélangeage permettant de produire un mélange homogène et stable des ingrédients entrant dans la composition de ladite formulation.

La formulation adhésive anaérobie suivant l'invention est utilisable dans les diverses applications des formulations anaérobies conventionnelles. Elle peut être employée, par exemple, pour la réalisation d'assemblages et en particulier pour le blocage d'écrous ou encore pour la réalisation de joints d'étanchéité, voire même pour effectuer des collages structuraux en réalisant tout d'abord un durcissement partiel du joint adhésif à température ambiante ou peu élevée puis en soumettant le joint adhésif partiellement durci à une post-cuisson à température plus élevée.

L'invention est illustrée par les exemples suivants donnés à titre non limitatif :

EXEMPLE 1:

On préparait six formulations adhésives anaérobies dont les compositions sont données en parties en poids dans le tableau I. L'une des formulations, à savoir formulation A, est une formulation témoin tandis que les autres (formulations 1.1. à 1.5) sont des formulations suivant l'invention.

TABLEAU I

| Formulation | A | 1,1 | 1,2 | 1,3 | 1,4 | 1,5 |
|---|---|---|---|---|---|---|
| .Diméthacrylate de triéthylène glycol | 97 | 87,3 | 77,6 | 67,9 | 58,2 | 48,5 |
| .Polyuréthanne linéaire α) | 0 | 10 | 20 | 30 | 40 | 50 |
| .HPC β) | 3 | 2,7 | 2,4 | 2,2 | 1,8 | 1,5 |
| .Saccharine | 0,3 | 0,27 | 0,24 | 0,21 | 0,18 | 0,15 |
| .N,N-diméthylparatoluidine | 0,3 | 0,27 | 0,24 | 0,21 | 0,18 | 0,15 |
| .Hydroquinone (p.p.m.) γ) | 1000 | 1000 | 1000 | 1000 | 1000 | 1000 |

α) - Polyuréthanne linéaire non réactif préparé par polycondensation de 91,7 parties en poids d'un polyétherdiol connu sous le nom de P2000 et consistant en un polyoxypropylèneglycol de $\overline{Mn}$ égale à 2000 avec 8,3 parties en poids de toluène diisocyanate, le polyuréthanne formé étant séparé du milieu réactionnel par précipitation.

β) - HPC : hydroperoxyde de cumène

γ) - La quantité d'hydroquinone est exprimée en ppm. en poids par rapport à l'ensemble des autres ingrédients de la formulation.

Préparation de la formulation témoin :

On faisait tout d'abord barboter de l'air dans le diméthacrylate pendant une heure à température ambiante, puis, en maintenant le barbotage et opérant sous agitation mécanique à température ambiante, on dissolvait successivement dans le diméthacrylate, la saccharine, la N,N-diméthylparatoluidine, l'HPC et enfin l'hydroquinone, cette dernière étant ajoutée sous la forme d'une solution à 10% dans le méthanol.

Préparation des formulations suivant l'invention :

On faisait tout d'abord barboter de l'air dans le diméthacrylate pendant une heure à température

ambiante, puis, en maintenant le barbotage d'air et en opérant sous agitation mécanique, on dissolvait dans le diméthacrylate tout d'abord le polyuréthanne linéaire à une température d'environ 50 °C, puis à température ambiante successivement la saccharine, la N,N-diméthylparatoluidine, l'HPC et enfin l'hydroquinone, cette dernière étant ajoutée en solution à 10% dans le méthanol.

Les formulations adhésives ainsi obtenues étaient ensuite soumises à divers essais pour déterminer la viscosité, le temps de gel et le temps de prise de chacune desdites formulations.

Détermination du temps de gel :

Dans cet essai, on plaçait un volume de formulation adhésive égal à $2cm^3$ dans un tube à essai ayant 125mm de longueur et 15mm de diamètre. Le tube était ensuite fermé et placé dans un bain maintenu à température constante égale à 80 °C. On notait le temps s'écoulant entre le moment où l'on place le tube à essai dans le bain et le moment où l'on observe un début de gélification de la formulation contenue dans le tube et prenait ce temps comme mesure du temps de gel, ledit temps donnant une mesure de la stabilité de la formulation. Un temps de gel élevé correspond à une stabilité importante de la formulation adhésive.

Détermination du temps de prise :

Dans cet essai, on plaçait plusieurs gouttes de la formulation anaérobie sur les filetages d'un boulon en acier, ayant un diamètre extérieur du filet égal à 9,52mm et comportant 24 filets par 2,54cm, et de l'écrou correspondant et l'on assemblait alors ces éléments. Périodiquement on déplaçait légèrement l'écrou par rapport au boulon pour déterminer le moment où la polymérisation s'est produite. Lorsqu'il n'était plus possible de faire tourner manuellement l'écrou par rapport au boulon, on notait le temps total écoulé et prenait ce temps comme mesure du temps de prise. Ce temps est d'autant plus faible que la vitesse de durcissement de la formulation anaérobie est plus élevée.

Les formulations adhésives anaérobies étaient également utilisées pour effectuer d'une part des essais de déblocage d'écrou et d'autre part des essais de collage de stérigmes en acier pour évaluer la résistance du joint adhésif durci.

Essai de déblocage d'écrou :

On utilisait un boulon en acier ayant un diamètre extérieur du filet égal à 9,52mm et comportant 24 filets par 2,54cm de longueur et l'écrou correspondant. On plaçait quelques gouttes de la formulation anaérobie sur les filets de boulon et de l'écrou puis assemblait lesdits éléments en s'assurant qu'une quantité suffisante de liquide était présente dans les filets pour réaliser un bon joint. Les assemblages boulon/écrou étaient ensuite soumis à un traitement thermique de manière à provoquer le durcissement de l'adhésif.

A l'issue du traitement thermique, on mesurait le couple de déblocage de l'écrou en utilisant une clé dynamométrique.

Essai de collage de stérigmes en acier :

On réalisait des assemblages constitués de deux stérigmes en acier ayant chacun 10 cm de longueur, 2,5cm de largeur et 0,4mm d'épaisseur que l'on collait l'un à l'autre au moyen de la formulation anaérobie choisie. Pour produire lesdits assemblages, on enduisait l'une des faces d'un premier stérigme, préalablement dégraissée au trichloréthylène, d'une couche uniforme de la formulation anaérobie puis appliquait la face d'un deuxième stérigme, également dégraissée au trichloréthylène, sur la face ainsi enduite du premier stérigme, de manière à former un assemblage comportant un joint adhésif d'environ 1,25cm de longueur.

Les assemblages obtenus faisaient ensuite l'objet d'un traitement thermique, après quoi on déterminait la résistance au cisaillement du joint adhésif en soumettant les assemblages à un essai de traction cisaillement en suivant les prescriptions de la norme ASTM D 1002-72. Pour la mise en oeuvre de l'essai de traction cisaillement, la vitesse de déplacement des mors de l'appareil de traction était égale à 1,33 mm/minute.

On donne dans le tableau II les valeurs des différentes grandeurs mesurées, chacune représentant une

valeur moyenne déterminée sur dix essais.

Au vu des résultats figurant au tableau II, il apparaît que l'addition d'un polyuréthanne linéaire non réactif à une formulation adhésive acrylique anaérobie permet de moduler la valeur du couple de déblocage des assemblages boulon/écrou. En outre la résistance au cisaillement des joints adhésifs durcis renfermant un tel polyuréthanne est améliorée dans la majorité des cas par rapport à celle du témoin.

TABLEAU II

| Formulation | A | 1.1 | 1.2 | 1.3 | 1.4 | 1.5 |
|---|---|---|---|---|---|---|
| .Viscosité à $10s^{-1}$ (Pa.s) | 0,008 | 0,073 | 0,29 | 0,68 | 1,12 | 1,17 |
| .Temps de gel à 80°C(min) | 15 | 7 | 10 | 15 | 45 | 40 |
| .Temps de prise (min) | 25 | 25 | 25 | 25 | 45 | 60 |
| .Couple de déblocage après traitement thermique (N.m) | | | | | | |
| - 24h à l'ambiante | 13 | 24 | 20 | 15 | 11 | 2 |
| - 24h à l'ambiante + 1h à 80°C | 29 | 25 | 17 | 15 | 12 | 8 |
| - 1h à 80°C + 1h à 150°C | 30 | 25 | 20 | 16 | 12 | 8 |
| - 1h à 80°C + 1h à 220°C | 29 | 18 | 13 | 6 | 5 | 6 |
| .Résistance au cisaillement après traitement thermique (MPa) | | | | | | |
| - 24h à l'ambiante | 1,7 | 1,6 | 2,6 | 2 | 0,6 | 0 |
| - 24h à l'ambiante + 1h à 80°C | 1,9 | 1,5 | 2,2 | 3,1 | 2,6 | 1,9 |
| - 1h à 80°C + 1h à 150°C | 2,3 | 1 | 6 | 4,5 | 3,6 | 3,3 |
| - 1h à 80°C + 1h à 220°C | 1 | 2,3 | 1,5 | 2,2 | 0,7 | 0,9 |

EXEMPLE 2 :

On préparait six formulations adhésives anaérobies dont les compositions sont données en parties en poids dans le tableau III. L'une des formulations, à savoir formulation A, est la formulation témoin dont la preparation est donnée dans l'exemple 1, tandis que les autres (formulations 2.1 à 2.5) sont des formulations suivant l'invention.

TABLEAU III

| Formulation | A | 2.1 | 2.2 | 2.3 | 2.4 | 2.5 |
|---|---|---|---|---|---|---|
| .Diméthacrylate de triéthylène glycol | 97 | 87,3 | 77,6 | 67,9 | 58,2 | 48,5 |
| .Précurseurs de polyuréthanne | | | | | | |
| -Polyéther diol P2000 | 0 | 7,75 | 15,5 | 23,25 | 31 | 38,75 |
| -Isocyanate polyfonctionnel δ) | 0 | 2,95 | 5,9 | 8,85 | 11,8 | 14,75 |
| .HPC | 3 | 2,7 | 2,4 | 2,1 | 1,8 | 1,5 |
| .Saccharine | 0,3 | 0,27 | 0,24 | 0,21 | 0,18 | 0,15 |
| .N,N-diméthylparatoluidine | 0,3 | 0,27 | 0,24 | 0,21 | 0,18 | 0,15 |
| .Hydroquinone (p.p.m.) | 1000 | 1000 | 1000 | 1000 | 1000 | 1000 |

δ) : Adduct de toluènediisocyanate et de triméthylolpropane commercialisé par BAYER sous le nom DESMODUR L 75.

Préparation des formulations suivant l'invention

On faisait tout d'abord barboter de l'air dans le diméthacrylate pendant une heure à température ambiante, puis, en maintenant le barbotage d'air et en agitant mécaniquement le milieu, on ajoutait au diméthacrylate, successivement, le polyétherdiol et l'isocyanate polyfonctionnel et l'on homogénéisait le tout pendant 2 heures à température ambiante, puis portait le mélange homogénéisé à 60° C et maintenait cette température pendant 1 heure pour améliorer la formation in situ du polyuréthanne. Au mélange ainsi obtenu on ajoutait alors successivement, à température ambiante, la saccharine, la N,N-diméthylparatoluidine, l'HPC et enfin l'hydroquinone, cette dernière étant utilisée en solution à 10% dans le méthanol.

Les formulations adhésives préparées étaient ensuite soumises à divers essais, comme indiqué dans l'exemple 1, pour déterminer la viscosité, le temps de gel et le temps de prise desdites formulations ainsi que les valeurs du couple de déblocage et la résistance au cisaillement du joint adhésif durci.

On donne dans le tableau IV les valeurs des différentes grandeurs mesurées, chacune représentant une valeur moyenne sur dix essais.

Au vu des résultats figurant au tableau IV, il ressort que la formation du polyuréthanne au sein de la formulation adhésive fournit des formulations qui sont plus fluides que les formulations renfermant un polyuréthanne préformé et présentent un temps de gel légèrement supérieur ainsi que des valeurs plus élevées du couple de déblocage et de résistance au cisaillement.

TABLEAU IV

| Formulation | A | 2.1 | 2.2 | 2.3 | 2.4 | 2.5 |
|---|---|---|---|---|---|---|
| .Viscosité à $10s^{-1}$ (Pa.s) | 0,008 | 0,02 | 0,032 | 0,036 | 0,051 | 0,27 |
| .Temps de gel à 80° C(min) | 15 | 20 | 15 | 45 | 60 | 80 |
| .Temps de prise (min) | 25 | 25 | 25 | 25 | 15 | 50 |
| .Couple de déblocage après traitement thermique (N.m) | | | | | | |
| - 24h à l'ambiante | 13 | 32 | 18 | 18 | 13 | 7 |
| - 24h à l'ambiante + 1h à 80° C | 29 | 30 | 18 | 25 | 11 | 7 |
| - 1h à 80° C + 1h à 150° C | 30 | 42 | 17 | 24 | 10 | 6 |
| - 1h à 80° C + 1h à 220° C | 29 | 18 | 16 | 17 | 6 | 4 |
| .Résistance au cisaillement après traitement thermique (MPa) | | | | | | |
| - 24h à l'ambiante | 1,7 | 3 | 2,3 | 0,6 | | |
| - 24h à l'ambiante + 1h à 80° C | 1,9 | 1,7 | 4,1 | 3,7 | 1,9 | 0,8 |
| - 1h à 80° C + 1h à 150° C | 2,3 | 1,3 | 5,6 | 4,9 | 1,7 | 0,8 |
| - 1h à 80° C + 1h à 220° C | 1 | 1,2 | 3,5 | 5 | 1 | 0,5 |

EXEMPLE 3 :

En opérant d'une manière analogue à celle décrite dans l'exemple 2, on préparait trois formulations adhésives anaérobies suivant l'invention, à savoir formulations 3.1 à 3.3, dont les compositions sont celles des formulations 2.1 à 2.3 respectivement à l'exception près que les formulations 3.1 à 3.3. sont exemptes de saccharine, de N,N-diméthylparatoluidine et d'hydroquinone.

En utilisant les formulations adhésives anaérobies ainsi obtenues et en opérant comme indiqué dans l'exemple 1, on formait des assemblages à partir de stérigmes en acier et soumettait lesdits assemblages à un traitement thermique, puis à un essai de traction cisaillement pour déterminer la résistance au cisaillement du joint de colle.

On utilisait également la formulation 3.2 pour un essai de détermination du couple de déblocage d'écrou après traitement thermique comme indiqué dans l'exemple 1.

Les résultats obtenus sont rassemblés dans le tableau V.

TABLEAU V

| Formulation | 3.1. | 3.2 | 3.3 |
|---|---|---|---|
| . Résistance au cisaillement après traitement thermique (MPa) | | | |
| - 24h à l'ambiante | 4,2 | 4,9 | 4,5 |
| - 24h à l'ambiante + 1h à 80 °C | 4,2 | 7,9 | 7,8 |
| - 1h à 80 °C + 1h à 150 °C | 9,6 | 13,4 | 13 |
| . Couple de déblocage après traitement thermique (N.m) | | | |
| - 24h à l'ambiante | | 20 | |
| - 24h à l'ambiante + 1h à 80 °C | | 20 | |
| - 1h à 80 °C + 1h à 150 °C | | 26 | |

EXEMPLE 4 :

En opérant d'une manière analogue à celle décrite dans l'exemple 2, on préparait trois formulations adhésives anaérobies suivant l'invention, à savoir formulations 4.1 à 4.3, dont les compositions sont celles des formulations 2.1 à 2.3 respectivement à l'exception près que les formulations 4.1 à 4.3 renfermaient seulement 200 p.p.m. d'hydroquinone et que le diméthacrylate employé était le diméthacrylate de tétraéthylèneglycol.

Les formulations adhésives ainsi obtenues étaient soumises aux essais, comme indiqué dans l'exemple 1, pour déterminer le temps de gel et le temps de prise de chacune desdites formulations et également à l'essai de détermination du couple de déblocage de systèmes boulon/écrou assemblés au moyen de ces formulations.

Les résultats obtenus, qui sont des moyennes sur dix essais, sont rassemblés dans le tableau VI.

En comparant les résultats présentés dans les tableaux IV et VI, il apparaît que le tétraéthylèneglycoldiméthacrylate donne des formulations adhésives anaérobies, qui sont plus stables chimiquement et plus intéressantes au niveau des propriétés mécaniques que celles faisant appel au triéthylèneglycoldiméthacrylate.

TABLEAU VI

| Formulation | 4.1 | 4.2 | 4.3 |
|---|---|---|---|
| .Temps de gel à 80 °C(min) | 25 | 50 | 65 |
| .Temps de prise (min) | 10 | 12 | 13 |
| .Couple de déblocage après traitement thermique (N.m) | | | |
| - 24h à l'ambiante | 33 | 23 | 25 |
| - 24h à l'ambiante + 1h à 80 °C | 40 | 28 | |
| - 1h à 80 °C + 1h à 150 °C | 35 | 23 | |
| - 1h à 80 °C + 1h à 220 °C | 18 | 21 | |

EXEMPLE 5 :

On préparait trois formulations adhésives anaérobies suivant l'invention, à savoir formulations 5.1. à 5.3, dont les compositions sont données en parties en poids dans le tableau VII.

TABLEAU VII

| Formulation | 5.1 | 5.2 | 5.3 |
|---|---|---|---|
| .Diméthacrylate de triéthylène glycol | 87,3 | 77,6 | 87,3 |
| .HPC | 2,7 | 2,4 | 2,7 |
| .Saccharine | 0,27 | 0,24 | 0,27 |
| .N,N-diméthylparatoluidine | 0,27 | 0,24 | 0,27 |
| .Résine époxyde (DGEBA)[ε)] | 10 | 20 | 10 |
| .Bis(amino-4 phényl)sulfone | 1 | 2 | 1 |
| .$BF_3$. MEA[λ)] | 0,01 | 0,02 | 0,01 |
| .Hydroquinone (p.p.m.) | 200 | 200 | 1000 |

ε) - DGEBA = diglycidyléther du bisphénol A
λ) - $BF_3$. MEA = complexe $BF_3$. monoéthylamine

Préparation des formulations adhésives :

On préparait tout d'abord une solutions de la bis(amino-4 phényl)sulfone, en abrégé DDS, et du complexe $BF_3$.MEA dans la résine époxyde. Pour ce faire, on dissolvait la DDS dans la résine époxyde maintenue sous agitation à une température d'environ 110° C, puis on amenait la solution ainsi obtenue à environ 85° C et on lui incorporait alors le complexe $BF_3$.MEA.

D'autre part, on faisait barboter de l'air dans le diméthacrylate pendant 1 heure à température ambiante, puis en poursuivant le barbotage d'air et en agitant mécaniquement le milieu on amenait la température de ce dernier aux environs de 65° C et en maintenant ladite température on lui incorporait la résine époxyde renfermant en solution la DDS et le complexe $BF_3$.MEA. La solution formée était alors ramenée à une température voisine de l'ambiante et on lui incorporait alors, sous agitation et barbotage d'air, successivement la saccharine, la N,N-di-methylparatoluidine, l'HPC et enfin l'hydroquinone sous la forme d'une solution à 10% dans le méthanol.

Les formulations adhésives anaérobies ainsi obtenues étaient soumises aux essais, comme indiqué dans l'exemple 1, pour déterminer le temps de gel et le temps de prise de chacune desdites formulations et d'autre part le couple de déblocage de systèmes boulon/écrou assemblés au moyen de ces formulations ainsi que la résistance au cisaillement du joint adhésif durci après traitement thermique.

Les résultats obtenus, qui représentent des moyennes sur dix essais, sont consignés dans le tableau VIII.

TABLEAU VIII

| Formulation | 5.1 | 5.2 | 5.3 |
|---|---|---|---|
| .Temps de gel | | | |
| - à 80° C | 6 min. | 7 min. | 30 min. |
| - à 25° C | plusieurs mois | plusieurs mois | plusieurs mois |
| .Temps de prise (min) | 5 | 8 | 25 |
| .Couple de déblocage après traitement thermique (N.m) | | | |
| - 24h à l'ambiante | 40 | 28 | |
| - 24h à l'ambiante + 1h à 80° C | 38 | 30 | |
| - 1h à 80° C + 1h à 150° C | 42 | 32 | |
| - 1h à 80° C + 1h à 220° C | ·54,5 | 45 | |
| .Résistance au cisaillement après traitement thermique (MPa) | | | |
| - 24h à l'ambiante | 2,2 | 1,7 | |
| - 24h à l'ambiante + 1h à 80° C | 1,6 | 1,6 | |
| - 1h à 80° C + 1h à 150° C | 2,2 | 2,3 | |
| - 1h à 80° C + 1h à 220° C | 4,7 | 3,7 | |

La comparaison des résultats du tableau VIII à ceux obtenus avec la formulation témoin A fait apparaître que la création d'un réseau tridimensionnel polyépoxyde au sein du joint adhésif acrylique conduit à des valeurs plus élevées du couple de déblocage et à une stabilité thermique améliorée du joint ahdésif durci.

EXEMPLE 6 :

On préparait quatre formulations adhésives anaérobies suivant l'invention, à savoir formulations 6.1 à 6.4, dont les compositions sont données en parties en poids dans le tableau IX.

TABLEAU IX

| Formulation | 6.1 | 6.2 | 6.3 | 6.4 |
|---|---|---|---|---|
| .Diméthacrylate de triéthylène glycol | 48,5 | 58,2 | 72,2 | 63,05 |
| .Précurseurs de polyuréthanne | | | | |
| - Polyétherdiol P2000 | 7,75 | 12,9 | 5,8 | 11,6 |
| - Isocyanate DESMODUR L 75 | 2,95 | 2,95 | 2,2 | 4,4 |
| .HPC | 1,5 | 1,8 | 2,25 | 1,95 |
| .Saccharine | 0,15 | 0,18 | 0,225 | 0,195 |
| .N,N-diméthylparatoluidine | 0,15 | 0,18 | 0,225 | 0,195 |
| .Résine époxyde (DGEBA) | 40 | 30 | 17,5 | 20 |
| .DDS | 4 | 3 | 1,75 | 2 |
| .$BF_3$.MEA | 0,4 | 0,3 | 0,175 | 0,2 |
| .Hydroquinone (p.p.m.) | 200 | 200 | | |

Préparation des formulations adhésives :

On préparait tout d'abord une solution de la DDS et du complexe $BF_3$.MEA dans la résine époxyde

comme indiqué dans l'exemple 5.

D'autre part, on faisait barboter de l'air dans le diméthacrylate pendant 1 heure à température ambiante, puis en poursuivant le barbotage d'air et en agitant mécaniquement le milieu on ajoutait le polyéther diol puis l'isocyanate au diméthacrylate et l'on homogénéisait le tout pendant 2 heures à température ambiante, puis portait le mélange homogénéisé à environ 65 °C et maintenait cette température pendant 1 heure pour améliorer la formation in situ du réseau polyuréthanne. Au milieu obtenu, toujours maintenu à la température d'environ 65 °C et sous agitations et barbotage d'air, on incorporait la résine époxyde renfermant en solution la DDS et le complexe $BF_3$.MEA. On ramenait alors le mélange ainsi réalisé à la température ambiante et lui ajoutait, sous agitation et barbotage d'air successivement la saccharine, la N,N-diméthylparatoluidine, l'HPC et enfin l'hydroquinone en solution à 10% dans le méthanol.

Les formulations anaérobies ainsi préparées étaient soumises aux essais, comme indiqué dans l'exemple 1, pour déterminer le temps de gel et le temps de prise de chacune desdites formulations et d'autre part le couple de déblocage de systèmes boulon/écrou assemblés au moyen de ces formulations ainsi que la résistance au cisaillement du joint adhésif durci après traitement thermique.

Les résultats obtenus, qui sont des moyennes sur dix essais, sont rassemblés dans le tableau X.

TABLEAU X

| Formulation | 6.1 | 6.2 | 6.3 | 6.4 |
|---|---|---|---|---|
| . Temps de gel à 80 °C (min.) | 240 | 180 | 180 | 180 |
| . Temps de prise (min.) | 90 | 45 | 13 | 23 |
| . Couple de déblocage après traitement thermique (N.m) | | | | |
| - 24h à l'ambiante | 12 | 22 | 30 | 23 |
| - 24h à l'ambiante + 1h à 80 °C | 15 | 30 | 38 | 28 |
| - 1h à 80 °C + 1h à 150 °C | 35 | 33 | 41 | 40 |
| - 1h à 80 °C + 1h à 220 °C | 51 | 42 | 49 | 43 |
| . Résistance au cisaillement après traitement thermique (MPa) | | | | |
| - 24h à l'ambiante | 1,8 | 2,9 | 3,8 | 5,6 |
| - 24h à l'ambiante + 1h à 80 °C | 5,3 | 5,5 | 3,1 | 6,8 |
| - 1h à 80 °C + 1h à 150 °C | 12,7 | 8 | 2,6 | 7,8 |
| - 1h à 80 °C + 1h à 220 °C | 16 | 7,5 | 2,5 | 5,1 |

Au vu des résultats du tableau X, il apparaît que la création d'un réseau polyuréthanne et d'un réseau polyépoxyde tridimensionnel au sein du joint acrylique permet non seulement d'obtenir un joint adhésif présentant une bonne stabilité thermique, mais également d'atteindre de bonnes performances mécaniques au niveau du blocage des filetages et en même temps dans certains cas (formulation 6.1) au niveau des assemblages d'éléments structuraux.

## EXEMPLE 7 :

Les formulations 6.1 et 6.3 étaient de nouveau évaluées après conservation pendant 15 jours à l'obscurité pour déterminer l'influence du vieillissement sur lesdistes formulations.

On donne dans le tableau XI les résultats des essais de déblocage d'écrou et de traction cisaillement effectués en faisant appel aux formulations vieillies.

Les résultats consignés dans le tableau XI font apparaître que les formulations n'ont pas évolué au niveau de la réticulation et qu'en outre il y a amélioration significative des caractéristiques mécaniques des joints adhésifs issus des formulations vieillies.

TABLEAU XI

| Formulation | 6.1 vieillie | 6.3 vieillie |
|---|---|---|
| . Couple de déblocage après traitement thermique (N.m) | | |
| - 24h à l'ambiante | 8 | 18,7 |
| - 24h à l'ambiante + 1h à 80 °C | 18 | 40 |
| - 1h à 80 °C + 1h à 150 °C | 70 | 44 |
| - 1h à 80 °C + 1h à 220 °C | 67 | 54 |
| . Résistance au cisaillement après traitement thermique (MPa) | | |
| - 24h à l'ambiante | 1 | 1,9 |
| - 24h à l'ambiante + 1h à 80 °C | 5,9 | 3,2 |
| - 1h à 80 °C + 1h à 150 °C | 14 | 14 |
| - 1h à 80 °C + 1h à 220 °C | 16 | 15,5 |

EXEMPLE 8:

En opérant d'une manière analogue à celle décrite dans l'exemple 6, on préparait une formulation adhésive anaérobie suivant l'invention, à savoir formulation 8.1, dont la composition correspondait à celle de la formulation 6.1 à l'exception près que la formulation 8.1 ne renfermait pas d'hydroquinone.

La formulation adhésive ainsi obtenue était soumise aux essais, comme indiqué dans l'exemple 1, pour d'une part déterminer le temps de gel et le temps de prise de la formulation et d'autre part le couple de déblocage de systèmes boulon/écrou assemblés au moyen de cette formulation ainsi quela résistance au cisaillement du joint adhésif après traitement thermique.

Les résultats obtenus, qui représentent des moyennes sur dix essais, sont donnés dans le tableau XII.

TABLEAU XII

| Formulation | 8.1 |
|---|---|
| .Temps de gel à 80 °C (min.) | 240 |
| .Temps de prise (min.) | 40 |
| .Couple de déblocage après traitement thermique (N.m) | |
| - 24h à l'ambiante | 12 |
| - 24h à l'ambiante + 1h à 80 °C | 18 |
| - 1h à 80 °C + 1h à 150 °C | 27 |
| - 1h à 80 °C + 1h à 220 °C | 46 |
| .Résistance au cisaillement après traitement thermique (MPa) | |
| - 24h à l'ambiante | 3,7 |
| - 24h à l'ambiante + 1h à 80 °C | 5,2 |
| - 1h à 80 °C + 1h à 150 °C | 8 |
| - 1h à 80 °C + 1h à 220 °C | 10 |

**Revendications**

1 - Formulation adhésive acrylique anaérobie monocomposante stable chimiquement et susceptible de fournir un joint adhésif durci présentant des résistances améliorées au choc et au cisaillement ou/et une bonne tenue thermique, ladite formulation étant du type comportant une phase acrylique monomère constituée, en poids, de 50 à 100% d'un ou plusieurs esters pluriacryliques et de 50 à 0% d'au moins un monomère insaturé choisi parmi les monomères monoacryliques et les monomères insaturés non acryliques polymérisables par voie radicalaire et un système générateur de radicaux libres, qui est soluble dans la phase acrylique monomère et dont l'action génératrice de radicaux libres est inhibée en présence d'oxygène, et elle se caractérise en ce qu'elle renferme en outre, en solution dans la phase acrylique monomère, un adjuvant d'amélioration de la résistance au choc et au cisaillement de la formulation durcie choisi parmi les polyuréthannes linéaires non réactifs et les polyuréthannes réticulés ou non formés in situ au sein de la phase acrylique monomère à partir d'un système précurseur de polyuréthanne mis en solution dans ladite phase acrylique et comportant un ou plusieurs isocyanates polyfonctionnels et un ou plusieurs polyols, ou/et un adjuvant de stabilisation thermique consistant en au moins une résine époxyde associée à un durcisseur latent de ladite résine.

2 - Formulation adhésive selon la revendication 1, caractérisée en ce que les polyols entrant dans la composition de l'adjuvant polyuréthanne ont des masses moléculaires moyennes en nombre comprises entre 60 et 200 000.

3 - Formulation adhésive selon la revendication 1 ou 2, caractérisée en ce que les isocyanates polyfonctionnels organiques associés aux polyols pour constituer l'adjuvant polyuréthanne sont choisis parmi les isocyanates organiques possédant au moins deux groupement isocyanates dans la molécule et ayant une masse moléculaire inférieure à 5000, lesdits isocyanates étant en particulier du type aliphatique acyclique ou cyclique ou encore du type aromatique.

4 - Formulation adhésive selon l'une des revendications 1 à 3, caractérisée en ce que l'adjuvant du type polyuréthanne linéaire préformé non réactif ou du type non réticulé formé in situ au sein de la phase acrylique monomère à partir du système précurseur de polyuréthanne est obtenu par réaction d'un ou plusieurs isocyanates difonctionnels avec un ou plusieurs diols, ledit système précurseur étant alors formé du ou desdits isocyanates difonctionnels et du ou desdits diols.

5 - Formulation adhésive selon l'une des revendications 1 à 3, caractérisée en ce que l'adjuvant du type polyuréthanne est un réseau polyuréthanne réticulé formé in situ au sein de la phase acrylique monomère à partir d'un système précurseur de polyuréthanne formé d'un ou plusieurs isocyanates polyfonctionnels et d'un ou plusieurs polyols choisis parmi les diols et les mélanges de diols et de polyols ayant au moins trois fonctions hydroxyles de telle sorte que ce système précurseur renferme une quantité appropriée d'au moins un isocyanate possédant au moins trois fonctions isocyanates ou/et d'au moins un polyol ayant au moins trois fonctions hydroxyles pour qu'il y ait réticulation du polyuréthanne sans qu'apparaisse de séparation de phases dans la formulation.

6 - Formulation adhésive selon la revendication 5, caractérisée en ce que la quantité de polyol ou polyols ayant au moins trois fonctions hydroxyles dans le système précurseur de polyuréthanne représente au plus 60% du poids du ou des diols présents dans ledit système et de préférence entre 0,5 et 15% dudit poids.

7 - Formulation adhésive selon l'une des revendications 4 à 6, caractérisée en ce que les diols sont choisis parmi les polyétherdiols et les polyesterdiols ayant des masses moléculaires moyennes en nombre comprises en 100 et 200 000 et de préférence entre 200 et 500 000.

8 - Formulation adhésive selon l'une des revendications 1 à 7, caractérisée en ce qu'elle renferme seulement l'adjuvant de type polyuréthanne préformé ou formé in situ et en ce que les pourcentages pondéraux x de la phase acrylique monomère et y de l'adjuvant polyuréthanne dans l'ensemble de ces deux composantes sont tels que $99,8 \leqq x \leqq 35$ et $0,2 \leqq y \leqq 65$ et de préférence tels que $95 \leqq x \leqq 50$ et $5 \leqq y \leqq 50$.

9 - Formulation adhésive selon l'une des revendications 1 à 7, caractérisée en ce qu'elle renferme simultanément l'adjuvant de type polyuréthanne préformé ou formé in situ et l'adjuvant de type époxyde et en ce que les pourcentages pondéraux x de la phase acrylique monomère, y de l'adjuvant polyuréthanne et z de l'adjuvant de type résine époxyde dans l'ensemble de ces trois composantes de la formulation sont tels que $15 \leqq x \leqq 99,8$, $0,1 \leqq y \leqq 60$ et $0,1 \leqq z \leqq 90$ avec $x + y + z = 100\%$ et de préférence tels que $30 \leqq x \leqq 89$, $1 \leqq y \leqq 30$ et $10 \leqq z \leqq 70$ avec $x + y + z = 100\%$.

10 - Formulation adhésive selon la revendication 1, caractérisée en ce qu'elle renferme seulement l'adjuvant de type résine époxyde et en ce que les pourcentages pondéraux x de la phase acrylique monomère et z de l'adjuvant de type époxyde dans l'ensemble de ces composantes sont tels que 99,8 $\leq$ x $\leq$ 50 et 0,2 $\leq$ z $\leq$ 50 et de préférence tels que 95 $\leq$ x $\leq$ 70 et 5 $\leq$ z $\leq$ 30.

11 - Formulation adhésive selon la revendication 9 ou 10, caractérisée en ce que la résine époxyde présente dans la formulation consiste en une ou plusieurs résines époxydes qui renferment au moins deux groupements époxydes dans la molécule.

12 - Formulation adhésive selon la revendication 11, caractérisée en ce que la ou les résines époxydes sont choisies parmi le diglycidyléther du bis(hydroxy-4 phényl)-2,2 propane, le diglycidyl-éther du bis-(hydroxy-4 phényl) méthane, le diglycidyléther du bis(hydroxy-4 phényl)-2,2 propane tétrabromé, le triglycidyléther du trihydroxyphénylméthane, le triglycidyléther du paraaminophénol, le tétraglycidyléther de la méthylène dianiline, le tétraglycidyléther du tétraphénylolétane, les polyglycidyléthers de résines phénol/formol, les polyglycidyléthers de résines crésol/formol, les résines polyépoxydées du type époxyhydantoines, époxycyanurates, polyoxypropylènes époxydés, phtalates de glycidyles et résines époxydes cycloaliphatiques.

13 - Formulation adhésive selon l'une des revendications 9 à 12, caractérisée en ce que le durcisseur latent de la résine époxyde est choisi parmi les diamines aromatiques, notamment les bis(aminophényl)-sulfones, et le dicyandiamide, la quantité dudit durcisseur représentant en particulier 1 à 30% et de préférence 5 à 15% du poids de la résine époxyde, ce durcisseur étant éventuellement utilisé en association avec un catalyseur choisi parmi les acides de LEWIS et leurs complexes avec notamment des amines, des éthers ou des alcools.

14 - Formulation adhésive selon l'une des revendications 9 à 12, caractérisée en ce que le durcisseur de la résine époxyde est un composé du type acide de LEWIS, ledit composé étant utilisé en quantité allant de 0,5 à 10% et de préférence de 1 à 6% en poids de la résine époxyde.

15 - Formulation selon l'une des revendications 1 à 14, caractérisée en ce que les esters pluriacryliques présents dans la formulation répondent à la formule :

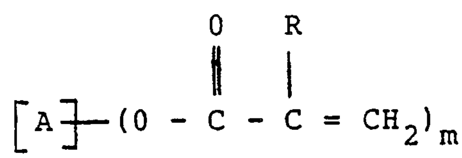

dans laquelle A représente un radical organique m-valent renfermant de 2 à 50 atomes de carbone, R désigne un atome d'hydrogène ou de chlore ou un radical alcoyle en $C_1$ à $C_3$, de préférence un radical méthyle, et m est un nombre entier au moins égal à 2 et de préférence allant de 2 à 5.

16 - Formulation adhésive selon la revendication 15, caractérisée en ce que les esters pluriacryliques sont des esters diacryliques de formule

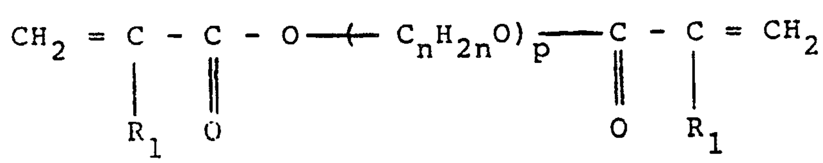

dans laquelle $R_1$ est un atome d'hydrogène ou un radical méthyle, n est un nombre entier allant de 2 à 4 et de préférence égal à 2 ou 3 et p est un nombre entier allant de 2 à 12 et de préférence prenant les valeurs de 2 à 8.

17 - Formulation adhésive selon l'une des revendications 1 à 16, caractérisée en ce que le système générateur de radicaux libres consiste en au moins un composé peroxydé, qui est soluble dans la phase acrylique monomère et dont l'action génératrice de radicaux libres est inhibée par l'oxygène, ou en une association d'un tel composé peroxydé avec un ou plusieurs activateurs.

18 - Formulation adhésive selon la revendication 17, caractérisée en ce que le composé peroxydé est un hydroperoxyde ou un composé susceptible de se décomposer ou de s'hydrolyser in situ pour donner un hydroperoxyde.

19 - Formulation adhésive selon la revendication 18, caractérisée en ce que l'hydroperoxyde répond à la formule $R_4OOH$, dans laquelle $R_4$ est un radical hydrocarboné en $C_2$ à $C_{18}$ et de préférence en $C_3$ à $C_{12}$, ledit radical étant éventuellement substitué par un ou plusieurs groupements fonctionnels sans action sur la fonction hydroperoxyde.

20 - Formulation adhésive selon la revendication 19, caractérisée en ce que le radical $R_4$ est un radical alcoyle, aryle ou aralcoyle.

21 - Formulation adhésive selon l'une des revendications 17 à 20, caractérisée en ce que la quantité globale de composés peroxydés représente moins de 10% et de préférence se situe entre 0,1 et 6% du poids des monomères à polymériser présents dans la formulation.

22 - Formulation adhésive selon l'une des revendications 17 à 21, caractérisée en ce que le ou les activateurs associés aux composés peroxydés dans le système générateur de radicaux libres sont choisis parmi les amines tertiaires dont les radicaux fixés à l'azote renferment jusqu'à dix atomes de carbone, en particulier trialcoylamines et N,N-dialcoylarylamines, les amines secondaires hétérocycliques, les sulfimides organiques utilisées seules ou en association avec des amines secondaires hétérocycliques ou des N,N-dialcoylarylamines, et les composés tels que succinimide, phtalimide et formamide.

23 - Formulation adhésive selon la revendication 22, caractérisée en ce que la quantité totale d'activateur est inférieure à 10% et de préférence comprise entre 0,05% et 6% du poids des monomères à polymériser présents dans la formulation.

24 - Formulation adhésive selon l'une des revendications 1 à 23, caractérisée en ce qu'elle renferme en outre un ou plusieurs additifs choisis parmi les agents chélatants d'impuretés métalliques , les inhibiteurs de polymérisation et les ingrédients tels que plastifiants, épaississants, colorants, agents thixotropes.

25 - Formulation adhésive selon l'une des revendications 1 à 24, caractérisée en ce qu'elle renferme une certaine quantité d'oxygène dissous et de préférence est saturée en oxygène.

26 - Application de la formulation selon l'une des revendications 1 à 25 à la réalisation de collages anaérobies, notamment joints d'étanchéité, blocage d'écrous et collages structuraux.

Office européen des brevets

# RAPPORT DE RECHERCHE EUROPEENNE

Numero de la demande

EP 88 40 3259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 684 617 (L.J. WINDECKER)<br>* Revendications 1-3 * | 1,10 | C 09 J 3/16<br>C 08 F 283/00 |
| A | EP-A-0 106 160 (LORD CORP.)<br>* Revendications 1-3; page 24, exemple 1 * | 1-7,9, 11,12 | |
| A | FR-A-2 249 119 (NATIONAL STARCH)<br>* Revendication 1 * | 1-8 | |
| A | US-A-4 408 023 (F.E. GOULD et al.)<br>* Colonne 6, ligne 45 - colonne 8, ligne 45 * | 1-8 | |
| | | | **DOMAINES TECHNIQUES RECHERCHES (Int. Cl.4)** |
| | | | C 08 F<br>C 08 G<br>C 08 L<br>C 09 J |

**Le présent rapport a été établi pour toutes les revendications**

| Lieu de la recherche | Date d'achèvement de la recherche | Examinateur |
|---|---|---|
| LA HAYE | 15-03-1989 | SCHUELER D.H.H. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)